# EUROPEAN PATENT APPLICATION

(11) **EP 3 070 667 A1**
(43) Date of publication of application: **21.09.2016**
(21) Application number: 14895824.2
(22) Date of filing: 09.12.2014
(51) Int. Cl.: G06Q 50/12, G06Q 30/02, G06Q 50/10

(54) **REVENUE MANAGEMENT SYSTEM AND REVENUE MANAGEMENT METHOD**

(30) Priority: 27.06.2014 JP 2014132098
(71) Applicant: Paradigmshift Inc., Chuo-ku, Tokyo 103-0004 (JP)
(72) Inventor: MOMOTA, Hiroshi, Tokyo 103-0004 (JP)
(74) Representative: Moore, Graeme Patrick
(86) International application number: PCT/JP2014/082534
(87) International publication number: WO 2015/198503

(57) **Abstract**

A revenue management system 100 includes a communication device 105 and an arithmetic device 104 configured to retrieve predetermined information including room sales price and customer rating for a predetermined accommodations facility and another accommodations facility other than the predetermined accommodations facility from web sites of multiple net agents 200, a site controller 300, and a terminal 400, etc., at predetermined time intervals; identify another accommodations facility as a competitive facility based on the information or as designated by the terminal 400 and the room sales price thereof, calculate a price obtained by increasing/decreasing, at a predetermined rate, a room sales price of the predetermined accommodations facility, as an offered price according to an extent of separation and a separation direction between a customer rating of the identified competitive facility and a customer rating of a predetermined accommodations facility, and send the offered price to a terminal.

## Description

### Technical Field

The present invention relates to a revenue management system and a revenue management method, and more specifically to a system and method for enabling efficient setting of competitive and appropriate prices on guest accommodations in multiple channels.

### Background Art

Regarding accommodations providers such as hotels, inns, etc., there is a business premise specific to the hospitality industry such that the maximum supply of rooms is fixed and inventory cannot be carried over due to the character of goods being sold (i.e., guest accommodations). For the accommodations providers operating on such a premise, it is important to sell their goods/services efficiently so as to minimize everyday inventory. Therefore, the accommodations providers have attempted to expand their sales channels not only through on-premise web sites and/or telephone reservations but also by contracting with network agents for making sales on the internet on behalf of the providers.

On one hand, if the accommodations provider leaves all of its own inventory to each of the above network agents simultaneously, there arises the risk of frequent double booking. On the other hand, if the accommodations provider distributes its inventory among the network agents so as to avoid double booking, loss of sales opportunities due to difference in sales capacity among the network agents may occur and may ultimately lead to a situation in which not all the inventory can be sold.

In view of the above, there is proposed a so-called site controller that checks sales at respective network agents contracting with an accommodations provider at certain time intervals and automatically adjusts the inventory of the accommodations provider in response to the sales of each network provider retrieved through the checking. As for the technique for inventory management for multiple sales channels, the below related art is proposed. In the related art is proposed a technique in which, for the purpose of efficient processing of accommodation reservations regardless of which accommodations facility or sales agent receives reservation requests, accommodation reservations are processed according to requests from user terminals and information indicating vacancies registered in an accommodations facility information database, etc., is updated (see Patent document 1).

### Related Art References

### Patent Documents

PLT 1 Japanese Patent Application Laid-open Publication No. 2008-26987

### SUMMARY OF THE INVENTION

### Problem to Be Solved by the Invention

As described above, the technique of improving sales efficiency by multiplication of sales channels has existed. However, it has been difficult to achieve improvement in sales efficiency only through expansion of the sales channels because, in reality, sales change substantially due to various conditions such as differences in sales price among the accommodations providers. This has caused repetition by the accommodations providers of checking the competitors' sales prices and setting the lowest price for the rooms to be sold during the same day on a daily basis. This kind of task has an uncertain basis in the experience, intuition, etc., of the person in charge, and moreover there is no verification of how this work is tied to actual sales.

As a result, excessively low price setting may cause dilution of brand image originally attached to the accommodations providers or accommodation facilities, and this dilution may affect future sales strategy. Or, conversely, excessively expensive prices are set for the quality of the facility, customer ratings, etc., simply on the basis of it being the high season may give customers an unfavorable impression. Ultimately, these situations may lead to decrease of income of accommodations providers. There does exist the concept of so-called revenue management, but such a concept is currently not applied based on a comprehensive consideration of the above conditions specific to accommodations providers and its application is substantially limited to the whims of the person in charge based on his/her own experience, etc.

### Solution to the Problem

The present invention is conceived in view of the above problems and has as its main object to provide a technique enabling efficient setting of competitive and appropriate prices on guest accommodations in multiple channels.

A revenue management system of the present invention to solve the above problem comprises: a communication device communicating with other devices through a network; and an arithmetic device, configured to execute: a process of retrieving a predetermined information including at least a room sales price and a customer rating, for a predetermined accommodations facility and another accommodations facility other than the predetermined accommodations facility, at predetermined time intervals, from at least any one of a web site of each of multiple net agents, a site controller having a contract with the predetermined accommodations facility, and an official web site which each accommodations facility itself operates; a process of identifying, by each of web sites of net agents or each of the official web sites, another accommodations facility being a competitive facility whose customer rating is within a predetermined range close to that of the predetermined accommodations facility, or another accommodations facility being a competitive facility in the vicinity of the predetermined accommodations facility and being designated by a predetermined terminal, and a room sales price thereof, and calculating, according to a extent of separation and a separation direction between the identified customer rating of the competitive facility and the customer rating of the predetermined accommodations facility, a price obtained by increasing or decreasing, at a predetermined rate, a room sales price of the predetermined accommodations facility or the competitive accommodations facility on the web site of the net agent or the official web site, as an offered price to the predetermined accommodations facility; and a process of executing at least any one of a notification of the offered price to a terminal of the predetermined accommodations facility and a setting instruction to the net agent or a predetermined server of an official web site of the predetermined accommodations facility to set the offered price to be a room sales price on the web site.

It is to be noted that, in the above-mentioned revenue management system, the arithmetic device may be configured to: on retrieving the information, retrieve information including an guest accommodations price, a customer rating, and a recommendation ranking regarding the predetermined accommodations facility and another accommodations facility, at predetermined time intervals, from at least any one of a web site of each of multiple net agents, a site controller having a contract with the predetermined accommodations facility, and an official web site which each accommodations facility itself operates; and in calculating the offered price, based on the retrieved information, identify, by each of web sites of net agents or each of the official web sites, another accommodations facility being a competitive facility whose customer rating or a recommendation ranking is within a predetermined range close to that of the predetermined accommodations facility, or another accommodations facility being a competitive facility in the vicinity of the predetermined accommodations facility and being designated by a predetermined terminal, and a room sales price thereof, and calculate an offered price by increasing or decreasing, at a predetermined rate, a room sales price of the predetermined accommodations facility or the competitive accommodations facility on the web site of the net agent or the official web site according to each extent of separation and each separation direction between the identified customer rating and the recommendation ranking of the competitive facility and the customer rating and the recommendation ranking of the predetermined accommodations facility.

Accordingly, a room sales price which is satisfactory to customers according to a degree of separation from competitor facilities in terms of the customer ratings and recommendation rankings, by which an enhanced Customer Lifetime Value for the accommodation facilities, namely a competitive and appropriate room sales price, can be offered to accommodation facilities.

In the above-mentioned revenue management system, the arithmetic device may be configured to: execute a process of, based on the information retrieved after the notification of offered price or the setting instruction, checking the room sales price of the predetermined accommodations facility against the offered price, and when detecting that the room sales price has been set to the offered price, retrieving room sales figures of the predetermined accommodations facility for a predetermined period from at least any one of the net agent, the site controller, and the official web site of the predetermined accommodations facility, and calculating a probability that rooms of the predetermined accommodations facility could be sold at the offered price based on the retrieved room sales figures; and
in calculating the offered price, according to a magnitude of the extent of separation between the calculated probability and a predetermined standard, increase the predetermined rate for reducing the room sales price of the predetermined accommodations facility or the competitive facility on the web site of the net agent or the official web site, and calculate a price obtained by increasing, at the increased predetermined rate, the room sales price of the predetermined accommodations facility or the competitive facility, as the offered price to the predetermined accommodations facility.

Accordingly, it becomes possible to confirm actual sales results in the case of selling accommodation rooms at the offered price, to validate whether the offered price was valid, and to continue to improve an algorithm for determining the offered price. Ultimately, a precise and competitive offered price can be offered to the accommodation facilities.

In the above-mentioned revenue management system, the arithmetic device may be configured to execute a process of retrieving an instruction of a lower limit value of the room sales price from the terminal of the predetermined accommodations facility; and in calculating the offered price, calculate a price obtained by reducing the room sales price of the predetermined accommodations facility or the competitive facility on the web site of the net agent or the official web site at a predetermined rate within a range of not falling below the lower limit value as the offered price to the predetermined accommodations facility.

Accordingly, unlimited low price competition from other accommodation facilities can be avoided, and an offered price can be offered to the accommodation facilities within a range of values which can maintain appropriate profits.

In the above-mentioned revenue management system, the arithmetic device may be configured to: in calculating the offered price, based on the retrieved information and information of room sales included in the retrieved information, identify a date of suspended room sales in the most competitive facility whose customer rating is closest to that of the predetermined accommodations facility or in the most competitive facility being in the vicinity of the predetermined accommodations facility and being designated from the terminal, identify a semi-competitive facility whose rooms are available for sale on the identified date and whose customer rating is lower than that of the most competitive facility and the room sales price thereof by each of web sites of net agents or each of the official web sites, and, according to the extent of separation between the customer rating of the identified semi-competitive facility and the customer rating of the predetermined accommodations facility, calculate a price obtained by increasing, at a predetermined rate, the room sales price of the predetermined accommodations facility or the semi-competitive facility on the web site of the net agent or the official web site as the offered price to the predetermined accommodations facility.

Accordingly, regarding a date of sale suspending by a competitive facility, a sale price which is increased appropriately in relation to other accommodation facilities can be offered as an offered price to the accommodations facility.

In the above-mentioned revenue management system, the arithmetic device may be configured to: in calculating the offered price, based on the retrieved information, when detecting that the remaining number of rooms of the predetermined accommodations facility becomes lower than or equal to a predetermined number, according to the extent of separation between the customer rating of the competitive facility whose customer rating is lower than that of the predetermined accommodations facility among the competitor facilities at the time of detection and the customer rating of the predetermined accommodations facility, calculate a price obtained by increasing, at a predetermined rate, the room sales price of the predetermined accommodations facility or the competitive facility on the web site of the net agent or the official web site as the offered price to the predetermined accommodations facility.

Accordingly, regarding a configuration of the guest accommodations price being based on a so-called booking curve, etc., in relation to competitor facilities, a competitive and appropriate offered price can be offered to the accommodation facilities.

In the above-mentioned revenue management system, the arithmetic device may be configured to execute: a process of retrieving, as room sales figures for a predetermined time period in the predetermined accommodations facility, sales figures of an accommodation plan including a predetermined service from at least any one of the net agent, the site controller, and the official web site of the predetermined accommodations facility, and based on the retrieved sales figures, calculating a probability that an accommodation plan including a predetermined service could be sold for a predetermined time period at a predetermined price to customers with predetermined attributes; a process of receiving information on each of an accommodation plan scheduled to be available for sale and a target customer from the terminal, and based on the calculated probability regarding the accommodation plan which matches to an attribute indicated by each piece of information, identifying an accommodation plan having the probability greater than or equal to a predetermined standard and the sales price thereof; a process of calculating, for a given location of the sales source accommodations facility in the identified accommodation plan which the retrieved sales figures indicate and a location of a designated accommodations facility designated from a predetermined terminal, based on information of location-by-location price advantage preliminarily stored in a storage device, according to the extent of separation and the separation direction of the price advantage between the sales source accommodations facility and the designated accommodations facility, a price obtained by increasing or reducing, at a predetermined rate, the sales price of the accommodation plan as the offered price of the accommodation plan in the designated accommodations facility; and a process of executing at least any one of a notification of the offered price to the terminal of the designated accommodations facility and a setting instruction of setting the offered price to be a sales price of the accommodation plan on the web site to the net agent or a predetermined server of the official web site of the designated accommodations facility.

Accordingly, it becomes possible to identify, for a predetermined target, an accommodation plan with high probability of sales leading to a so-called hot-selling product and to offer the sale price as an appropriate one according to the location of the accommodations facility.

In the above-mentioned revenue management system, the arithmetic device may be configured to execute: a process of, in calculating the offered price, based on the retrieved information and information on each of room sales included in the retrieved information and facility locations, calculating a proportion of the competitive facility whose rooms are not suspended to sell among the competitor facilities whose customer ratings are within a predetermined range close to that of a predetermined accommodations facility and which are located within a predetermined range from the predetermined accommodations facility or among the competitor facilities being designated from the terminal to the all of the competitor facilities; a process of calculating, according to a magnitude of the calculated proportion and a magnitude of remaining days until an date of stay of room available for sale in the predetermined accommodations facility on the web site of a predetermined net agent, a price obtained by more reducing, at a predetermined rate, the room sales price in the predetermined accommodations facility or the competitive facility on the web site of the net agent or the official web site, larger the proportion compared with a predetermined value and smaller the remaining days compared with a predetermined value, as the offered price to the predetermined accommodations facility; and a process of calculating, according to a magnitude of the calculated proportion and a magnitude of remaining days until an date of stay of room available for sale in the predetermined accommodations facility on the web site of a predetermined net agent, a price obtained by more increasing, at a predetermined rate, the room sales price in the predetermined accommodations facility or the competitive facility on the web site of the net agent or the official web site, smaller the proportion compared with a predetermined value and larger the remaining days compared with a predetermined value, as the offered price to the predetermined accommodations facility.

Accordingly, based on each of the situations that an accommodations facility is under a competitive situation that its evaluation value is similar to that of a certain accommodations facility and that its location is where another neighboring accommodations facility (namely a competitive facility) suspends to be on sale or not, the demand in the area (location) on the web site of the net agent can be judged. Further, Accordingly and an amount of remaining days until the date of stay, an offer of sales price appropriately corresponding to an actual demand situation and sales situation becomes possible, such that the offered price is increased when the demand is high and the remaining days are few, and such that the offered price is reduced when the demand is low and the remaining days are few.

Further, a revenue management method of the present invention implemented by an information processing device with a communication device communicating with other devices through a network comprises: retrieving a predetermined information including at least a room sales price and a customer rating, regarding a predetermined accommodations facility and another accommodations facility except the predetermined accommodations facility, at predetermined time intervals, from at least any one of a web site of each of multiple net agents, a site controller having a contract with the predetermined accommodations facility, and an official web site which each accommodations facility itself operates; identifying, by each of web sites of net agents or each of the official web sites, another accommodations facility being a competitive facility whose customer rating is within a predetermined range close to that of the predetermined accommodations facility, or another accommodations facility being a competitive facility in the vicinity of the predetermined accommodations facility and being designated by a predetermined terminal, and a room sales price thereof, and calculating, according to a extent of separation and a separation direction between the identified customer rating of the competitive facility and the customer rating of the predetermined accommodations facility, a price obtained by increasing or decreasing, at a predetermined rate, a room sales price of the predetermined accommodations facility or the competitive accommodations facility on the web site of the net agent or the official web site, as an offered price to the predetermined accommodations facility; and executing at least any one of a notification of the offered price to a terminal of the predetermined accommodations facility and a setting instruction to the net agent or a predetermined server of an official web site of the predetermined accommodations facility to set the offered price to be a room sales price on the web site.

Further, the revenue management method of the present invention may comprise: with the information processing device, on retrieving the information, retrieving information including an guest accommodations price, a customer rating, and a recommendation ranking regarding the predetermined accommodations facility and another accommodations facility, at predetermined time intervals, from at least any one of a web site of each of multiple net agents, a site controller having a contract with the predetermined accommodations facility, and an official web site which each accommodations facility itself operates; and with the information processing device, in calculating the offered price, based on the retrieved information, identifies, by each of web sites of net agents or each of the official web sites, another accommodations facility being a competitive facility whose customer rating or a recommendation ranking is within a predetermined range close to that of the predetermined accommodations facility, or another accommodations facility being a competitive facility in the vicinity of the predetermined accommodations facility and being designated by a predetermined terminal, and a room sales price thereof, and calculates an offered price by increasing or decreasing, at a predetermined rate, a room sales price of the predetermined accommodations facility or the competitive accommodations facility on the web site of the net agent or the official web site according to each extent of separation and each separation direction between the identified customer rating and the recommendation ranking of the competitive facility and the customer rating and the recommendation ranking of the predetermined accommodations facility.

Further, the revenue management method of the present invention may comprise: with the information processing device, based on the information retrieved after the notification of offered price or the setting instruction, checking the room sales price of the predetermined accommodations facility against the offered price, and when detecting that the room sales price has been set to the offered price, retrieving room sales figures of the predetermined accommodations facility for a predetermined period from at least any one of the net agent, the site controller, and the official web site of the predetermined accommodations facility, and calculating a probability that rooms of the predetermined accommodations facility could be sold at the offered price based on the retrieved room sales figures; and, with the information processing device, in calculating the offered price, according to a magnitude of the extent of separation between the calculated probability and a predetermined standard, increasing the predetermined rate for reducing the room sales price of the predetermined accommodations facility or the competitive facility on the web site of the net agent or the official web site, and calculating a price obtained by increasing, at the increased predetermined rate, the room sales price of the predetermined accommodations facility or the competitive facility, as the offered price to the predetermined accommodations facility.

Further, the revenue management method of the present invention may comprise: with the information processing device, retrieving an instruction of a lower limit value of the room sales price from the terminal of the predetermined accommodations facility; and, with the information processing device, in calculating the offered price, calculating a price obtained by reducing the room sales price of the predetermined accommodations facility or the competitive facility on the web site of the net agent or the official web site at a predetermined rate within a range of not falling below the lower limit value as the offered price to the predetermined accommodations facility.

Further, the revenue management method of the present invention may comprise: with the information processing device, in calculating the offered price, based on the retrieved information and information of room sales included in the retrieved information, identifying a date of suspended room sales in the most competitive facility whose customer rating is closest to that of the predetermined accommodations facility or in the most competitive facility being in the vicinity of the predetermined accommodations facility and being designated from the terminal, identifying a semi-competitive facility whose rooms are available for sale on the identified date and whose customer rating is lower than that of the most competitive facility and the room sales price thereof by each of web sites of net agents or each of the official web sites, and, according to the extent of separation between the customer rating of the identified semi-competitive facility and the customer rating of the predetermined accommodations facility, calculating a price obtained by increasing, at a predetermined rate, the room sales price of the predetermined accommodations facility or the semi-competitive facility on the web site of the net agent or the official web site as the offered price to the predetermined accommodations facility.

Further, the revenue management method of the present invention may comprise: with the information processing device, in calculating the offered price, based on the retrieved information, when detecting that the remaining number of rooms of the predetermined accommodations facility becomes lower than or equal to a predetermined number, according to the extent of separation between the customer rating of the competitive facility whose customer rating is lower than that of the predetermined accommodations facility among the competitor facilities at the time of detection and the customer rating of the predetermined accommodations facility, calculating a price obtained by increasing, at a predetermined rate, the room sales price of the predetermined accommodations facility or the competitive facility on the web site of the net agent or the official web site as the offered price to the predetermined accommodations facility.

Further, the revenue management method of the present invention may comprise: with the information processing device, retrieving, as room sales figures for a predetermined time period in the predetermined accommodations facility, sales figures of an accommodation plan including a predetermined service from at least any one of the net agent, the site controller, and the official web site of the predetermined accommodations facility, and based on the retrieved sales figures, calculating a probability that an accommodation plan including a predetermined service could be sold for a predetermined time period at a predetermined price to customers with predetermined attributes; with the information processing device, receiving information on each of an accommodation plan scheduled to be available for sale and a target customer from the terminal, and based on the calculated probability regarding the accommodation plan which matches to an attribute indicated by each piece of information, identifying an accommodation plan having the probability greater than or equal to a predetermined standard and the sales price thereof; with the information processing device, calculating, for a given location of the sales source accommodations facility in the identified accommodation plan which the retrieved sales figures indicate and a location of a designated accommodations facility designated from a predetermined terminal, based on information of location-by-location price advantage preliminarily stored in a storage device, according to the extent of separation and the separation direction of the price advantage between the sales source accommodations facility and the designated accommodations facility, a price obtained by increasing or reducing, at a predetermined rate, the sales price of the accommodation plan as the offered price of the accommodation plan in the designated accommodations facility; and with the information processing device, executing at least any one of a notification of the offered price to the terminal of the designated accommodations facility and a setting instruction of setting the offered price to be a sales price of the accommodation plan on the web site to the net agent or a predetermined server of the official web site of the designated accommodations facility.

Further, the revenue management method of the present invention may comprise: with the information processing device, in calculating the offered price, based on the retrieved information and information on each of room sales included in the retrieved information and facility locations, calculating a proportion of the competitive facility whose rooms are not suspended to sell among the competitor facilities whose customer ratings are within a predetermined range close to that of a predetermined accommodations facility and which are located within a predetermined range from the predetermined accommodations facility or among the competitor facilities being designated from the terminal to the all of the competitor facilities; with the information processing device, calculating, according to a magnitude of the calculated proportion and a magnitude of remaining days until an date of stay of room available for sale in the predetermined accommodations facility on the web site of a predetermined net agent, a price obtained by more reducing, at a predetermined rate, the room sales price in the predetermined accommodations facility or the competitive facility on the web site of the net agent or the official web site, larger the proportion compared with a predetermined value and smaller the remaining days compared with a predetermined value, as the offered price to the predetermined accommodations facility; and with the information processing device, calculating, according to a magnitude of the calculated proportion and a magnitude of remaining days until an date of stay of room available for sale in the predetermined accommodations facility on the web site of a predetermined net agent, a price obtained by more increasing, at a predetermined rate, the room sales price in the predetermined accommodations facility or the competitive facility on the web site of the net agent or the official web site, smaller the proportion compared with a predetermined value and larger the remaining days compared with a predetermined value, as the offered price to the predetermined accommodations facility.

### Advantageous Effects of the Inventions

According to the present invention, an efficient setting of competitive and appropriate prices on guest accommodations in multiple channels becomes feasible.

### BRIEF DESCRIPTION OF THE DRAWINGS

Figure 1 shows an exemplary construction of a network including a revenue management system of one embodiment of the present invention.
Figure 2 shows an exemplary hardware construction of the revenue management system of the present embodiment.
Figure 3 shows an exemplary data structure of a posted information table of the present embodiment.
Figure 4 shows an exemplary data structure of a sales figures table of the present embodiment.
Figure 5 shows an exemplary data structure of an accommodation plan sales figures table of the present embodiment.
Figure 6 shows an exemplary data structure of a price advantage table of the present embodiment.
Figure 7 is a flow chart showing exemplary process 1 of a revenue management method of the present embodiment.

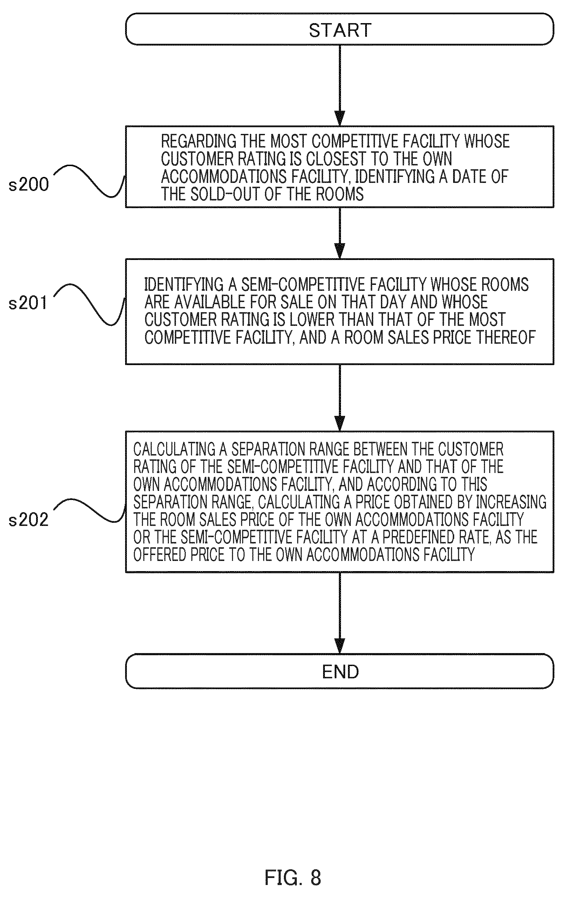

Figure 8 is a flow chart showing exemplary process 2 of a revenue management method of the present embodiment.
Figure 9 is a flow chart showing exemplary process 3 of a revenue management method of the present embodiment.
Figure 10 is a flow chart showing exemplary process 4 of a revenue management method of the present embodiment.
Figure 11 is a flow chart showing exemplary process 5 of a revenue management method of the present embodiment.
Figure 12 shows an example of rules for calculating proposed prices in the revenue management method of this disclosure.

### DETAILED DESCRIPTION

### ---SYSTEM CONFIGURATION---

An embodiment of the present invention will be described in detail referring to the drawings hereinbelow.

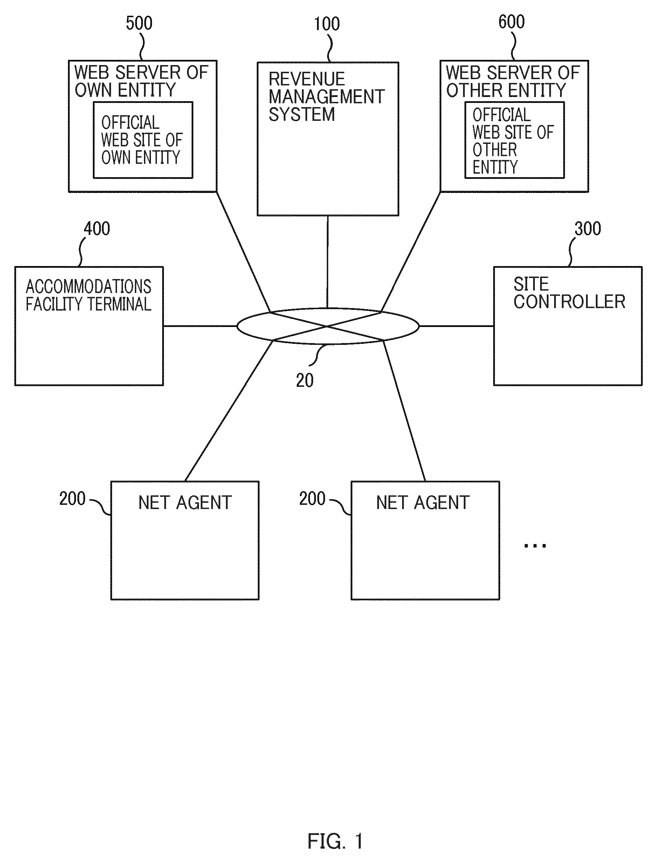

Figure 1 is a diagram showing a network configuration including a revenue management system 100 according to an embodiment of the present invention. The revenue management system 100 in Figure 1 is a computer system enabling efficient setting of competitive and appropriate prices on guest accommodations in multiple channels.

Here, a target to which the revenue management system 100 presents a proposed price resulting from processing is an accommodations provider, more specifically an accommodations facility terminal 400 of the accommodations provider. The accommodations provider makes a contract with an owner/operator of the revenue management system 100 for services provided by the system 100. The revenue management system 100 is communicably connected with the accommodations facility terminal 400 owned by the accommodations provider via a network 20. It is assumed that, so as to sell all the rooms as inventoried in its own accommodations facility, the above accommodations provider not only has its own sales channels through its own web site operated on its own web server 500 or available using telephone reservations, but also makes a contract with a plurality of network agents 200 for selling on the internet on behalf of the accommodations provider and leave room inventory the network agents 200. Hereinafter, it is also assumed that a main target of various processes performed by the revenue management system 100 is "the accommodations facility" of the accommodations provider above.

The accommodations provider above also uses a so-called site controller 300 that checks sales at the network agents 200 contracting with the accommodations provider at certain time intervals, and automatically adjusts the inventory of the accommodations provider in response to the sales of each network provider 200 retrieved through the checking. The revenue management system 100 of the present embodiment is connected to a plurality of network agents 200, the site controller 300, and the accommodations facility terminal 400 via the network 20 as a minimum configuration. A plurality of web servers for operating official web sites owned by the respective accommodations providers are also connected with the network 20. The revenue management system 100 is also connected with the web servers. Among the web servers, the web server for operating the official web site of the accommodations facility is designated the own web server 500. The web server for operating the official web site of other entities is designated the other web server 600.

Other than the above, with the network 20 may be connected to an accommodations facility core system, called a property management system (PMS), which carries out a whole series of business processes performed in an accommodations facility, such as room reservations, room management, and billing. In this case, the revenue management system 100 can retrieve information relating to the processes of the present embodiment from the PMS instead of the site controller 300. Further, the revenue management system 100 may be configured to include at least the plurality of network agents 200 and the site controller 300 in the above plurality of network agents 200, the site controller 300, the accommodations facility terminal 400, and the PMS (not shown).

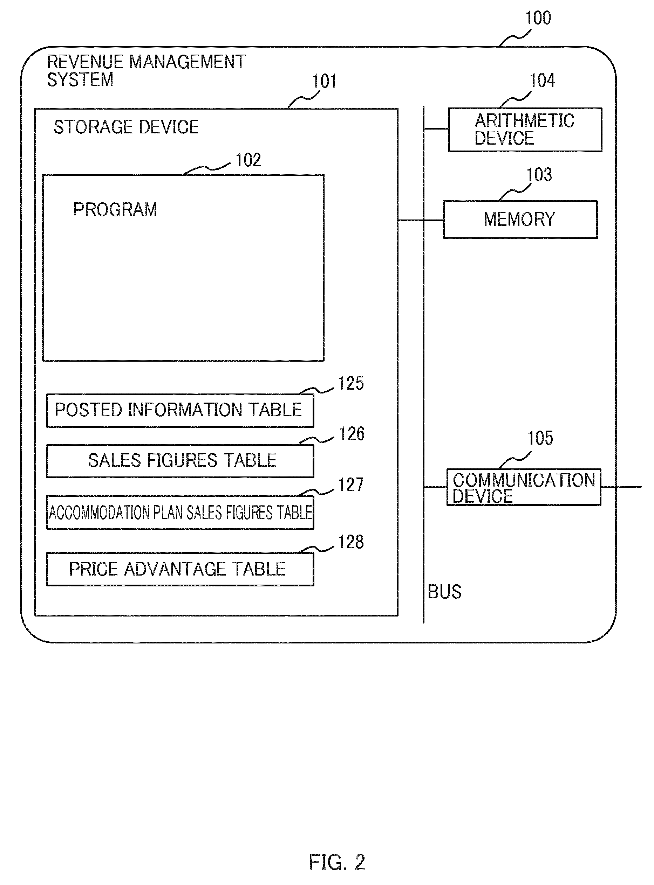

Figure 2 shows an exemplary hardware configuration of the revenue management system 100 of the present embodiment. The revenue management system 100 of the present embodiment may be configured as a server device, for example. Although the revenue management system 100 is illustrated as a single device for ease of explanation in the present embodiment, the system 100 may be configured by mutual cooperation of a plurality of servers, each equipped with the required functions.

The above revenue management system 100 is configured by connecting, via an internal bus, a storage device 101 configured with non-volatile memory devices such as a hard disk drive and a solid state drive (SSD), a memory 103 configured with volatile memory devices such as a random access memory (RAM), an arithmetic device 104 such as a central processing unit (CPU), and a communication device 105 such as a network interface card (NIC).

In the storage device 101, at least a posted information table 125, a sales figures table 126, an accommodation plan sales figures table 127, and a price advantage table 128 are stored. Data configuration examples of the tables 125-128 are described in detail hereinbelow.

In the revenue management system 100 above, the arithmetic device 104 reads a program 102 stored in the storage device 101 into the memory 103 and executes the same to implement required functions. Note that these functions may be implemented as hardware such as electronic circuits.

### ---Example of Functional Configuration---

Next, description of the configuration and the functions of the revenue management system 100 implemented based on the program 102, for example will be given.

The revenue management system 100 of the present embodiment has the function of retrieving predetermined information including at least room sales prices and customer ratings regarding its own accommodations facility and the other accommodation facilities at each web site of the plurality of network agents 200 with which the above accommodations provider has a contract from at least one of the web sites, the site controller 300 having a contract with the own accommodations provider, and the web servers 500 and 600 for the official web sites operated by the respective accommodations providers, at predetermined time intervals, and storing the retrieved information in the posted information table 125 of the storage device 101. On retrieving the information from the web sites of the network agents 200 and the official web sites by the revenue management system 100, robots and/or agent programs may be deployed at the respective web sites before starting the system 100 so that the robots and/or agent programs can upload the data to the system 100. Optionally, the revenue management system 100 may be configured to read the web sites sources and retrieve data with predetermined tags defined by the system 100 from the source.

Further, based on the information retrieved and stored in the posted information table 125, the revenue management system 100 has the function of identifying the accommodation facilities of competitor accommodations providers having customer ratings within a predetermined range from the customer ratings of its own accommodations facility or other accommodation facilities designated as competitor facilities by the accommodations facility terminal 400 for facilities in the vicinity of the accommodations facility within a predetermined distance from the accommodations facility, and the room sales prices for the same for each of the web sites of the network agents 200 and the official web sites. The revenue management system 100 also has the function of calculating prices obtained by raising or lowering the room sales prices for the accommodations facility or the competitor facilities at the web sites of the network agents 200 and the official web sites by a predetermined rate according to extent of separation and separation directions between the customer ratings for the identified competitor facilities and the customer rating of the accommodations facility as the prices as offered prices for the accommodations facility. The separation direction is determined to include an ascending direction from the customer rating up to the customer rating of the accommodations facility and a descending direction from the customer rating down to the customer rating of the accommodations facility. The other accommodations facility is defined as one operated by other accommodations providers.

The revenue management system 100 has the function of at least one of sending notification of the above offered prices to the accommodations facility terminal 400 via the communication device 105 and sending an instruction for setting the above offered prices as the room sales prices for the predetermined servers for operating the web sites of the network agents 200 and the official web sites. In this sense, the revenue management system 100 may be configured to have an algorithm for setting the room sales prices for the servers operating the web sites provided by the network agents 200 and the accommodations facility.

Regarding retrieval of the predetermined information including at least the room sales prices and the customer ratings, the revenue management system 100 may be configured to have the function of retrieving information including room sales prices, customer ratings, and recommendation rankings regarding its own accommodations facility and the other accommodation facilities from at least one of the web sites of the respective network agents 200, the site controller 300 having a contract with the own accommodations provider, and the official web sites operated by the respective accommodations providers, at predetermined time intervals, and storing the retrieved information in the posted information table 125 of the storage device 101.

In this configuration, regarding calculation of the above offered prices, the revenue management system 100 has the function of identifying the other accommodation facilities having customer ratings or recommendation rankings within a predetermined range from the customer rating or the recommendation ranking of the accommodations facility or the other accommodation facilities designated as competitor facilities by the accommodations facility terminal 400 for facilities in the vicinity of the accommodations facility, and the room sales prices for the same, for each of the web sites of the network agents 200 and the official web sites, based on the retrieved information including at least the room sales prices, the customer ratings, and the recommendation rankings. The revenue management system 100 also has the function of calculating offered prices by raising or lowering the room sales prices for the accommodations facility or the competitor facilities at the web sites of the network agents 200 and the official web sites by a predetermined rate according to extent of separation and separation directions between the customer ratings and the recommendation rankings for the identified competitor facilities and the customer ratings and recommendations of its own accommodations facility.

Further, the revenue management system 100 may have the following functions: checking the room sales prices of the accommodations facility against the offered prices based on the information including the room sales prices and the customer ratings retrieved after the notification of the offered prices or sending of the setting instructions described above; when detected that the room sales prices are set to the offered prices, retrieving room sales figures for a predetermined time period at the predetermined accommodations facility from at least one of the network agents 200, the site controller 300, and the official web site of the accommodations facility; and calculating a probability that the rooms of the accommodations facility could be at the offered prices for the predetermined time period based on the retrieved room sales figures.

Further, the revenue management system 100 may have the following functions: in calculating the offered prices, increasing a predetermined rate for lowering the room sales prices of the accommodations facility or the competitor facilities at the web sites of the network agents 200 or the official web site according to the extent of separation between the calculated probability and a predetermined standard; and calculating a price by lowering the room sales prices of the accommodations facility or the competitor facilities according to the increased predetermined rate to set the same as the offered prices of the accommodations facility.

Further, the revenue management system 100 may have the function of receiving designation of a lower limit value of the room sales price from the accommodations facility terminal 400. In this case, in calculating the offered prices, the revenue management system 100 has the function of calculating a price by lowering the room sales prices of the accommodations facility or the competitor facilities at the web sites of the network agents 200 or the official web sites according to the predetermined rate so that the lowered price is not less than the lower limit value on the same as the offered prices of the accommodations facility.

Further, the revenue management system 100 may have the following functions: on calculating the above-mentioned offered prices, identifying the most competitive facility having the closest customer rating of the customer rating of the accommodations facility or designated by the accommodations facility terminal 400 among facilities in the vicinity of the accommodations facility; identifying a date or dates on which rooms sales are suspended at the most competitive facility in one of the posted information table 125 in the storage device 101, the web sites of the network agents 200, and the official web sites of the accommodation facilities; identifying a semi-competitive facility for which room sales available on the above identified dates and having a customer rating lower than the customer rating of the most competitive facility and the room sales price for the same for each of the web sites of the network agents 200 or the official web sites; and calculating a price by increasing the room sales prices for the accommodations facility or the identified semi-competitive facility at the web sites of the network agents 200 or the official web sites by a predetermined rate according to a extent of separation between the customer rating of the identified semi-competitive facility and the customer rating of the accommodations facility to set the same as the offered price for the accommodations facility.

Further, the revenue management system 100 has the functions of, in the above-described calculation of the offered price, based on the retrieved information from the web site of net agent 200 or the sales figures table 126, when detecting that the remaining number of rooms of the accommodations facility becomes lower than or equal to a predetermined number, calculating a price obtained by increasing, at a predetermined rate, the room sales price of the accommodations facility or the competitive facility on the web site of the net agent 200 or the above-mentioned official web site as the offered price to the accommodations facility according to the extent of separation between the customer rating of the competitive facility whose customer rating is lower than that of the accommodations facility among the competitor facilities at the time of detection and the customer rating of the accommodations facility.

Further, the revenue management system 100 has the functions of: retrieving, as room sales figures for a predetermined time period in the accommodations facility, sales figures of an accommodation plan including a predetermined service from at least any one of the net agent 200, the site controller 300, and the official web site of the accommodations facility; storing this into the accommodation plan sales figures table 127; and based on the sales figures stored in the accommodation plan sales figures table 127, calculating a probability that an accommodation plan including a predetermined service could be sold for a predetermined time period at a predetermined price to customers with predetermined attributes.

Further, the revenue management system 100 has the functions of: receiving information on each of an accommodation plan scheduled to be on sale and a target customer from the accommodations facility terminal 400; and based on the above-mentioned calculated probability regarding the accommodation plan matching attributes the information indicates, identifying an accommodation plan having a probability greater than or equal to a predetermined standard and the sales price thereof.

Further, the revenue management system 100 has the functions of: calculating, for a given location of the sales source accommodations facility in the above-mentioned identified accommodation plan which the above-mentioned retrieved sales figures indicate and a location of a designated accommodations facility designated from the accommodations facility terminal 400, based on the price advantage table 128 preliminarily stored in the storage device 101, and according to the extent of separation and the separation direction of the price advantage between the sales source accommodations facility and the above-mentioned designated accommodations facility, a price obtained by increasing or reducing, at a predetermined rate, the sales price of the accommodation plan as the offered price of the accommodation plan in the above-mentioned designated accommodations facility.

Further, the revenue management system 100 has a function of executing at least any one of a notification of the offered price to the accommodations facility terminal 400 of the designated accommodations facility and a configuration designation of setting the offered price to be a sales price of the accommodation plan on the web site to the net agent 200 or a predetermined server of the official web site of the accommodations facility.

### ---Example of Data Structure---

Next, an example of data structure of a table which the revenue management system 100 of the present embodiment utilizes is explained.

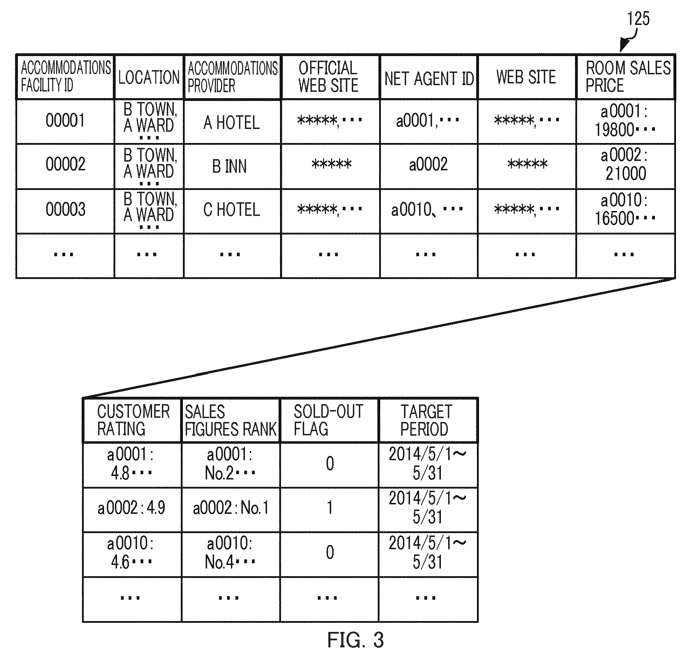

Figure 3 is a figure showing an example of data structure of the posted information table 125 of the present embodiment. The posted information table 125 is a table storing information regarding both its own accommodations facility and other accommodations facilities, specifically location; room sales price; customer rating; a rank or popularity as a recommendation (all of which are periodically determined and updated using a predetermined algorithm by the net agent) in each of web sites of multiple net agents 200 or the official web site of the accommodations facility; and a sellout. The posted information table 125 is an aggregation of records that correlate values such as location of the accommodations facility, the accommodations provider (operator), the URL of the official web site, an ID of the net agent handling room sales of the accommodations facility, the URL of web site which the net agent provides for the room sales, room sales prices on the web site (either of the official web site or the web site of the net agent capable of retrieving the information), customer rating of the accommodations facility, a recommendation ranking in a recent predetermined period, and a sold-out flag indicating that all the rooms in the accommodations facility with a target period are currently booked, for example by setting the accommodations facility ID as a key.

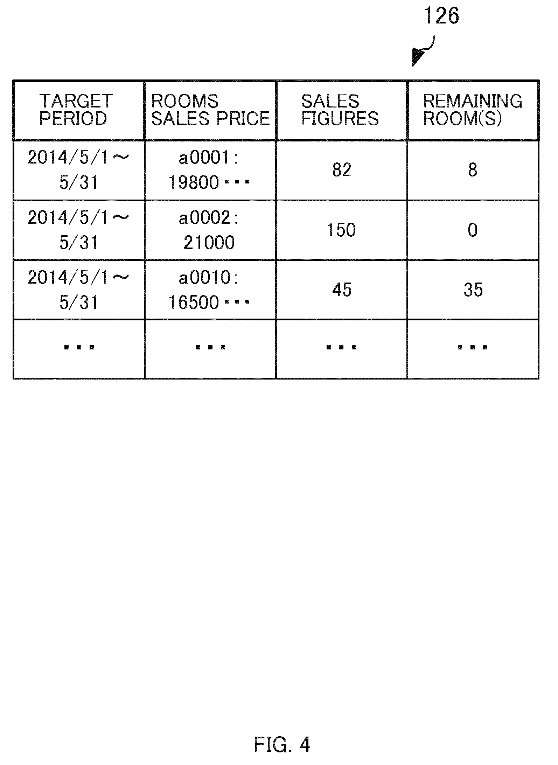

Further, figure 4 is a figure showing an example of data structure of the sales figures table 126 of the present embodiment. This sales figures table 126 is a table storing information on each of room sales price over a predetermined period in the accommodations facility, sales figures, and number of rooms remaining. The sales figures table 126 is an aggregation of records correlating, for example, target period, room sales price of the target period, sales figures at the price, and remaining room inventory.

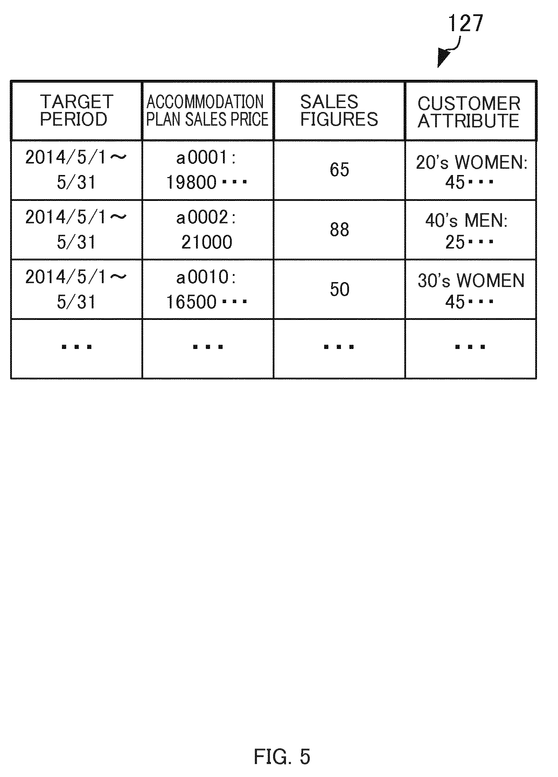

Further, figure 5 is a figure showing an example of data structure of the accommodation plan sales figures table 127 of the present embodiment. This accommodation plan sales figures table 127 is a table storing sales figures of the accommodation plan including a predetermined service and attributes of sales target customers of the accommodation plan as room sales figures in a predetermined period in the accommodations facility. The accommodation plan sales figures table 127 is an aggregation of records correlating, for example, target period, sales price of the accommodation plan in the target period, sales figures, and customer attributes (example: sex, age, etc.).

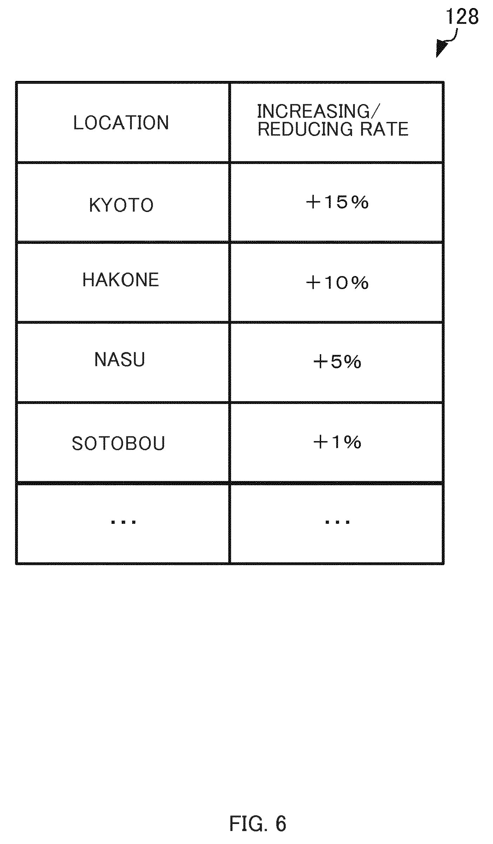

Further, figure 6 is a figure showing an example of data structure of the price advantage table 128 of the present embodiment. This price advantage table 128 is a table storing price advantage information price for accommodation facilities by location. The price advantage table 128 is an aggregation of records of correlating values of increased or reduced prices from the averaged sales prices of accommodation facilities having the same rating (example: the number of stars indicating a rank of the accommodations facility, the customer rating on the web site of the net agent, etc.), which corresponds to a price advantage in a case in which the accommodations facility exists in the area, for example by setting an area name as a key.

### ---Processing Procedure Example 1---

Below, an actual procedure of the revenue management method of the present embodiment is explained based on the drawings. Each action corresponding to the revenue management method explained below is implemented by the program 102 being executed by being read from the memory 103 of the revenue management system 100. Moreover, this program 102 comprises program code to conduct the various actions described below.

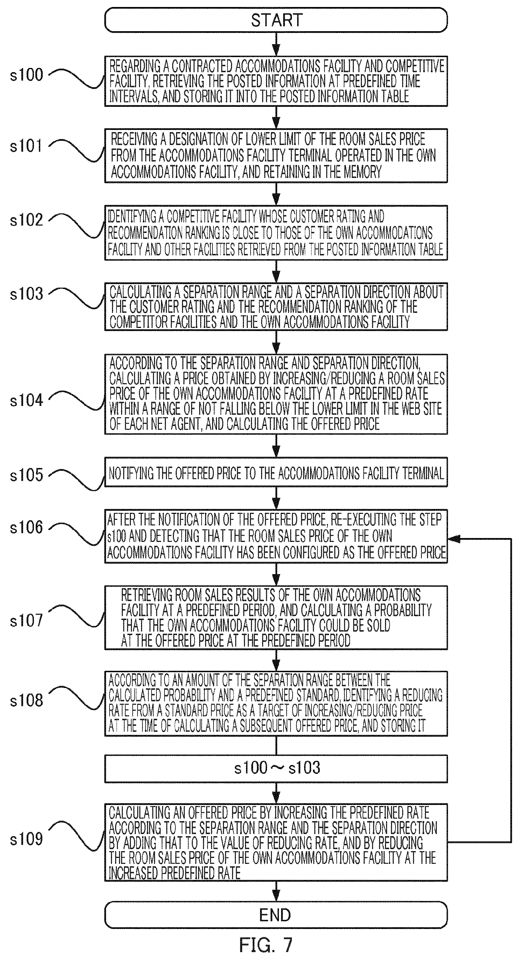

Figure 7 is a flowchart showing a process example 1 of the revenue management method of the present embodiment. In this case, the revenue management system 100, regarding an accommodations facility under contract (the accommodations facility) and other competitive accommodation facilities besides, at predetermined time intervals such as half an hour or one hour, retrieves posted information on the web site for the room sales which the net agent 200 provides from the net agents 200 or from the site controller 300 conducting inventory management according to the state of room sales of each of these net agents 200, and the revenue management system 100 stores this posted information in the posted information table 125 in the storage device 101 (S100). It is to be noted that, in the following explanations, it is presumed that necessary information can be retrieved from the net agent 200 and/or the site controller 300. However, where the necessary information cannot be retrieved from the net agent 200 and/or the site controller 300, it is assumed that the information is retrieved from the web servers 500, 600 operating the official web site of each accommodations facility, as a function of the revenue management system 100 as mentioned above (same below). Of course, it is possible that the two information retrieving methods are combined as required.

Here, a specific example of the information stored in the posted information table 125 is, as exemplified in figure 3, an accommodations facility ID as identification information of the accommodations facility, a target period (a retrieving period of the posted information in the interval between information acquisition), an ID of the net agent, the URL of the web site, a room sales price in the target period on the web site, a customer rating of the accommodations facility in the target period, a recommendation ranking in the target period, a sold-out flag indicating all rooms in the accommodations facility are booked, and the number of rooms remaining. There are cases in which the sales figures and the number of rooms remaining are not posted to the web site of the above-mentioned net agent 200. In these cases, the revenue management system 100 queries the site controller 300 managing sales at the net agents 200 or a predetermined server of the net agent 200, and retrieves the corresponding data. Of course, it is assumed that a contract to permit data transfers between the revenue management 100, and the net agent 200 and the site controller 300 is in place.

The posted information table 125 is created as described above and the revenue management system 100 updating at predetermined time intervals receives an instruction of a lower limit value of the room sales price at a certain timing from the accommodations facility terminal 400, which is operated in the above-mentioned accommodations facility, and associates this lower limit with the above-mentioned ID of the accommodations facility and retains the association in the memory 103 (S101).

Thereafter, the revenue management system 100, for example, receives a instruction from the accommodations facility terminal 400 or detects elapse of a predetermined period of time previously stipulated and identifies another accommodations facility as a competitive facility whose customer rating is within a predetermined range close to the above-mentioned accommodations facility, in terms of the customer rating and the recommendation ranking, about the above-mentioned accommodations facility and other accommodation facilities, obtained by reading from the posted information table 125 (S102). It is to be noted that, in the step S102, it is possible that the revenue management system 100 receives an instruction of the competitive facility from the accommodations facility terminal 400.

For example, in a case in which the customer rating of the accommodations facility is "4.8" and the recommendation ranking of the same is "Second place", another accommodations facility whose evaluation value is within a range of 0.2 of the customer rating "4.8", namely the customer rating within a range of "4.6"-"5.0", and whose recommendation ranking is within a range of 2 of the recommendation ranking "Second place", namely the recommendation value within a range of "First place"- "Fourth place", is identified as a competitive facility. It is to be noted that, it is possible that the revenue management system 100, regarding this step S102, retrieves each of the customer ratings and the recommendation ranking by re-executing the above-mentioned step S100.

Next, the revenue management system 100 calculates each separation range and each separation direction between the customer rating and the recommendation ranking at the web sites of the net agents 200 obtained regarding the above-mentioned competitor facilities and the customer rating and the recommendation ranking of the accommodations facility obtained from the posted information table 125 (S103).

For example, it is assumed that, in a case in which the customer rating of the accommodations facility is "4.8" and where the recommendation ranking is "Second place", three competitor facilities whose customer ratings are within a range of 0.2 of the customer rating "4.8", namely within a range of "4.6"-"5.0", and whose recommendation rankings are within a range of 2 from the recommendation ranking "Second place", namely within a range of "First place"-"Fourth place", are identified in the above-mentioned step S102. It is assumed that the customer ratings and the recommendation rankings of these three competitor facilities are, respectively, the most competitive facility: the customer rating "4.9" and the recommendation ranking "First place"; semi-competitive facility: customer rating "4.7" and the recommendation ranking "Third place"; and semi-competitive facility: the customer rating "4.6" and the recommendation ranking "Fourth place".

In this case, the revenue management system 100 identifies, as the extent of separation regarding the most competitive facility, the customer rating: 4.9-4.8=0.1 and the recommendation ranking: Second place - First place = 1, and the revenue management system 100 identifies the negative separation direction as the separation direction, because both the customer rating and the recommendation ranking of the most competitive facility are higher. Similarly, the revenue management system 100 identifies, as the extent of separation regarding one of the semi-competitor facilities, the customer rating: 4.8-4.7=0.1 and the recommendation ranking: Third place - Second place = 1, and the revenue management system 100 identifies the positive separation direction as the separation direction, because both the customer rating and the recommendation ranking of the accommodations facility are higher than those of the semi-competitive facility. The revenue management system 100 identifies, as the extent of separation regarding the other of the semi-competitive felicities, the customer rating: 4.8-4.6=0.2 and the recommendation ranking: Fourth place - Second place=2, and the revenue management system 100 identifies the positive separation direction as the separation direction, because both the customer rating and the recommendation ranking in the accommodations facility are higher than those of the semi-competitor facilities.

Note that it is assumed that the revenue management system 100 preliminarily receives, from the accommodations facility terminal 400, a designation of a weighted value for each competitive facility in a case in which multiple competitor facilities could be identified, and retains these weightings in the memory 103. For example, in the memory 103, the weighting 1.0 is retained for the most competitive facility, namely the other accommodations facility in first place in the recommendation rankings, the weighting 0.5 is retained for the semi-competitive facility, namely the other accommodations facility in second place, and the weighting 0.2 is retained for the other accommodations facility in third place.

In this case, the revenue management system 100 calculates a total extent of separation regarding the customer rating of 0.1 (the extent of separation (the customer rating) from the most competitive facility) x1.0+0.1 (the extent of separation (the customer rating) from one of the semi-competitor facilities) x0.5+0.2 (the extent of separation (the customer rating) from the other of the semi-competitor facilities) x0.2= 0.1+0.05+0.04=0.19, etc.

Further, similarly, a total extent of separation regarding the recommendation ranking is calculated to be 0.1 (the extent of separation (the recommendation ranking) from the most competitive facility) x1.0+0.1 (the extent of separation (the recommendation ranking) from one of the semi-competitor facilities) x0.5+0.2 (the extent of separation (the recommendation ranking) from the other of the semi-competitor facilities) x0.2= 0.1+0.05+0.04=0.19, etc.

Further, it is assumed that the revenue management system 100 is instructed by the accommodations facility terminal 400 to weight the customer rating and the recommendation ranking in a ratio of "the customer rating: the recommendation ranking= 10:0.2", etc., and retains this ratio in the memory 103. In this case, the revenue management system 100 calculates the total extent of separation between the accommodations facility and competitor facilities to be 0.19x10+1.9x0.2= 1.9+0.38=2.28, etc.

Further, in a case in which the separation direction from the most competitive facility: positive, the separation direction from one of the semi-competitor facilities: positive, and the separation direction from the other of the semi-competitor facilities: positive, the revenue management system 100 can ascertain that there are more competitor facilities whose separation direction is positive and that the overall separation direction is positive, etc.

Subsequent to the above-mentioned step S103, the revenue management system 100, according to the extent of separation and the separation direction as calculated above, increases/reduces room sales prices of the accommodations facility at the website of each net agent 200 or at the official web site, at a predetermined rate, within a range which does not fall below the above-mentioned lower limit value on price, and calculates an offered price thereby (S104).

For example, in a case in which the total extent of separation is "2.28", the overall separation direction is positive, and the increasing/reduction rate of the room sales price per unit extent of separation is 5% (which the revenue management system 100 retains in the memory 103 or the storage device 101 by receiving an instruction from the accommodations facility terminal 400), if a room sales price of the accommodations facility on the web site of a certain net agent 200 is "25,000 yen", the revenue management system 100 calculates an offered price to be 25000x ((2.28x5/100)+1)=27,850 yen.

Further for example, in a case in which the total extent of separation is "1.5", the overall separation direction is negative, and the increasing/reduction rate of the room sales price per unit extent of separation is 5%, if a room sales price of the accommodations facility on the web site of a certain net agent 200 is "25,000 yen", the revenue management system 100 calculates an offered price to be 25000x (1-(1.5x5/100))= 23,125 yen. However, if a lower limit value of the above-mentioned room sales price is for example 23,200 yen, the calculated offered price "23,125 yen" is modified to be "23,200 yen".

It is to be noted that a standard to increase/reduce the price may be, for example, a room sales price averaged among the competitor facilities, not the room sales price of the accommodations facility itself.

Next, the revenue management system 100 notifies the accommodations facility terminal 400 of the calculated offered price in the above-mentioned step S104 (S105). Alternatively, the revenue management system 100 may send an instruction, to a predetermined server of the net agent 200 or a server of the official web site of the accommodations facility, to set the calculated offered price as the room sales price on the web site.

Thereafter, the revenue management system 100 re-executes the above-mentioned step S100 after the above-mentioned notification of the offered price or the above-mentioned configuration designation, and based on the information retrieved by this re-execution of the room sales price regarding the accommodations facility which becomes a target of the offered price, detects that the room sales price of the accommodations facility is identical to the above-mentioned offered price, namely that the room sales price is designated to be the offered price (S106). Then the revenue management system 100 retrieves room sales figures in a predetermined period in said predetermined accommodations facility from the net agent 200 or the site controller 300 (of course, it may be from the official web site), and calculates a probability that the rooms of the accommodations facility could be sold at the offered price in the predetermined period, based on the retrieved room sales figures (S107).

For example, in a case in which the room sales figures in the above-mentioned accommodations facility in the last month indicates that 90 rooms of the total room inventory of 100 rooms have been sold out in the time period at an offered price of "27,850 yen", the revenue management system 100 calculates a probability that the rooms of the accommodations facility in the last month could be sold out at an offered price of "27,850 yen" to be 75%, etc. Otherwise, in a case in which the room sales figures in the above-mentioned accommodations facility in the last month indicates that 75 rooms of the total room inventory of 100 rooms have been sold out in the time period at an offered price "23,200 yen", the revenue management system 100 calculates a probability that the rooms of the accommodations facility in the last month could be sold out at the offered price "23,200 yen" to be 95%, etc.

Next, the revenue management system 100, according to a magnitude of the extent of separation between the probability calculated in the above-mentioned step S107 and a predetermined standard, identifies a reduction rate from a standard price, which is a target of increasing/decreasing price (the room sales price of the accommodations facility or competitor facilities) when calculating the offered price thereafter, and stores it in the memory 103 or the storage device in association with the net agent 200 and the accommodations facility (S108). For example, in a case in which the probability calculated in the above-mentioned step S107 is 75% and the predetermined standard is 80% (namely, a minimally expected sales probability), the revenue management system 100 calculates the extent of separation among these to be 5%, and the above-mentioned reduction rate to be 5x0.8=4%, etc., if a coefficient per unit of this extent of separation is 0.8, etc.

After step S108, the processing of the above-mentioned steps S100-S103 is started again, and, on executing the processing of price calculation, the revenue management system 100 retrieves the value of the reduction rate retained in the memory 103, etc. in step S108 for the accommodations facility in the net agent 200. Then, the revenue management system 100 increases a predetermined rate according to the extent of separation and the separation direction in step S104 by adding the value of the reduction rate; reduces the room sales price of the accommodations facility on the web site of the net agent 200 or the official web site at the increased predetermined rate; and calculates the offered price (S109). Namely, for the accommodations facility to which the offered price with low sales probability was set, when calculating the offered price next time, the offered price will be reduced at a reduction rate determined by the difference from a desired sales probability, thereby making sales probability more credible.

After the above, the revenue management system 100 returns from the processing at step S109 to the processing at step S106, and repeats steps S106-S109.

### ---Processing Procedure Example 2---

A calculation processing of the offered price in a case in which a sold-out situation occurs in competitor facilities is now explained.

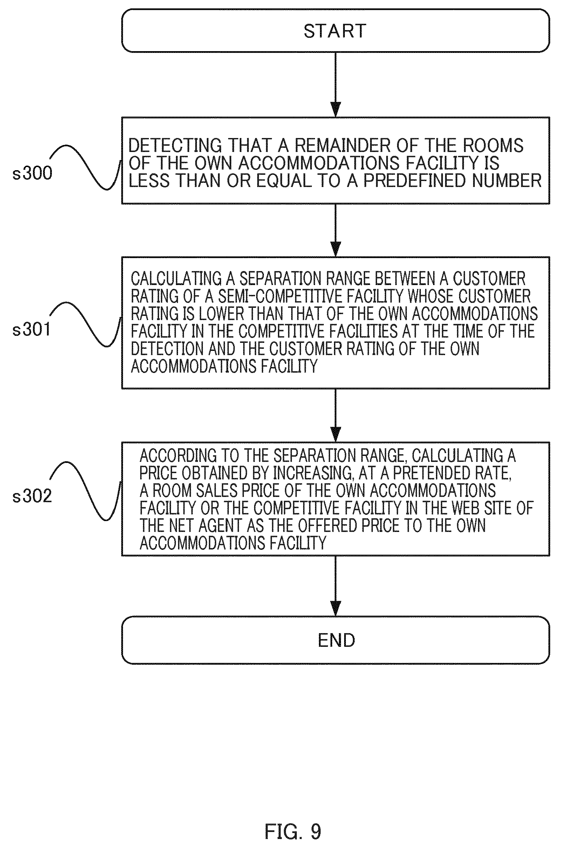

Figure 9 is a flowchart showing a process example 2 of the revenue management method of the present embodiment. In this case, the revenue management system 100, regarding the most competitive facility whose customer rating is closest to that of the above-mentioned accommodations facility or which is in the vicinity of the accommodations facility and is designated by the accommodations facility terminal 400, identifies the date the rooms sold out, namely the date of the sold-out flag "1" in the posted information table 125 in the storage device 101 or the web site of the net agent 200, or on the official web site of the accommodations facility (S200).

Next, the revenue management system 100 identifies a semi-competitive facility whose rooms are available for sale on the identified date and whose customer rating is lower than that of the most competitive facility and its room sales price by the web sites of the net agents 200 or by each of official web sites of the accommodation facilities (S201).

For example, the revenue management system 100 identifies a semi-competitive facility "XX Resort Hotel" having rooms available for sale on "May, 31" and whose customer rating of "4.6" is lower than the "4.9" of the most competitive facility "YY Hotel" and its room sales price "18,000 yen" on the web site of the net agent "ZZ Travel Agency".

Moreover, the revenue management system 100 calculates the extent of separation between the customer rating of the semi-competitive facility identified in the step S201 and the customer rating of the accommodations facility (S202), and Accordingly extent of separation, the revenue management system 100 calculates a price obtained by increasing, at a predetermined rate, a room sales price of the accommodations facility or the semi-competitive facility on the web site of the net agent 200 or the official web site as the offered price to the accommodations facility (S203).

For example, the revenue management system 100 calculates the extent of separation between the customer rating "4.6" of the semi-competitive facility identified in the step S201 as "XX Resort Hotel" and the customer rating "4.8" of the accommodations facility to be "0.2", etc., and obtains a multiplied value "2%" by multiplying this extent of separation "0.2" by a predetermined coefficient "10%". Then the revenue management system 100 calculates a price "24,480 yen" obtained by increasing, at a predetermined rate "2%", the room sales price of the accommodations facility "24,000 yen" on the web site of the net agent "ZZ Travel Agency" as the offered price to the accommodations facility.

Namely, where the most competitive facility is fully booked, room sales prices of the accommodations facility are increased appropriately based on relations to accommodation facilities in the vicinity or in the equivalent class, and thereby benefit can be effectively ensured.

### ---Processing Procedure Example 3---

Subsequently, a process of calculating the offered price according to the number of rooms unsold in the net agent 200 is explained.

Figure 9 is a flowchart showing a process example 3 of the revenue management method of the present embodiment.

In this case, the revenue management system 100 detects, from the website of the net agent 200 or the sales figures table 1226, that the number of rooms remaining in the accommodations facility becomes less than or equal to a predetermined number (S300), and calculates the extent of separation between the customer rating of a competitive facility whose customer rating is lower than that of the accommodations facility among the competitor facilities at the time of detection and the customer rating of the accommodations facility (S301).

For example, the revenue management system 100 detects that the number of rooms remaining in the accommodations facility becomes less than or equal to a predetermined number "10 rooms", and calculates the extent of separation between the customer rating of a competitive facility "4.6" whose customer rating is lower than that of the accommodations facility among the competitor facilities at the time of detection "4.8" and the customer rating of the accommodations facility "4.8" to be "0.2", etc..

Further, the revenue management system 100, according to the above-mentioned extent of separation, calculates a price obtained by increasing, at a predetermined rate, a room sales price of the accommodations facility or a competitive facility on the web site of the net agent 200 or the official web site, as the offered price to the accommodations facility (S302).

For example, the revenue management system 100 calculates a multiplied value "2%" by multiplying the above-mentioned width "0.2" by a predetermined value of "10%", and calculates a price of "18,360 yen" obtained by increasing, at a rate "2%", the room sales price of the accommodations facility on the web site of the net agent 200 "18,000 yen", as the offered price to the accommodations facility.

### ---Processing Procedure Example 4---

Subsequently, processing in the case of calculating an offered price for an accommodation plan is explained.

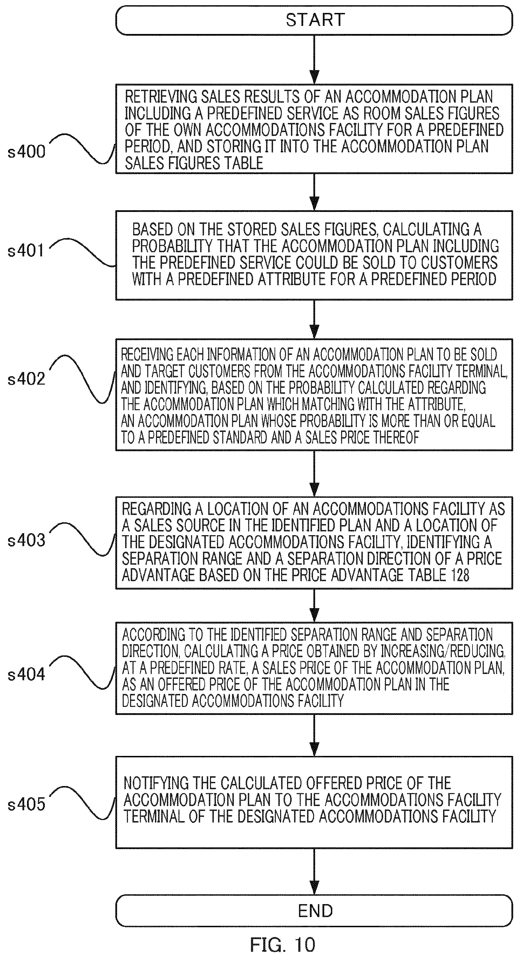

Figure 10 is a flowchart showing a process example 4 of the revenue management method of the present embodiment. In this case, the revenue management system 100 retrieves sales figures of the accommodation plan including a predetermined service, from the net agent 200 or the site controller 300 (or the official web site), as room sales figures in a predetermined period in the accommodations facility and competitor facilities, and then stores this information in the accommodation plan sales figures table 127 (S400).

Subsequently, the revenue management system 100 calculates a probability, based on the sales figures stored in the accommodation plan sales figures table 127 as stated above, that the accommodation plan including the predetermined service could be sold to customers with predetermined attributes for a predetermined time period at a predetermined price (S401).

For example, it is assumed that the revenue management system 100 could sell 50 accommodation plans called "Relaxing Girls' Party Plan with Late Checkout and Massage" in the last month to women in their twenties (in total in each net agent) at "19,800 yen". Further, it is assumed that the total inventory was 65. In this case, the probability of sales of the accommodation plan in the last month can be calculated to be (50/65)x100=77% for women in their twenties.

Further, similarly, it is assumed that the revenue management system 100 could sell 40 accommodation plans called "Girls' Party Plan with Early Check-in and Welcome Drink" in the last month to women in their twenties (in total in each net agent) at "21,000 yen". Further, it is assumed that the total inventory was 65. In this case, the probability of sales of the accommodation plan in the last month can be calculated to be (40/65)x100=62% for women in their twenties.

Subsequently, the revenue management system 100 receives information on each of an accommodation plans to be sold and target customers from the accommodations facility terminal 400, and based on the above-mentioned calculated probability, for accommodation plans which match an attribute indicated by the information, the revenue management system 100 identifies an accommodation plan whose probability is higher or equal to a predetermined standard, and a sale price thereof (S402).

For example, assume the revenue management system 100 received an accommodation plan: "Girls' Party Plan" and target customers: "women in their twenties" as the information for an accommodation plan to be sold, and target customers, from the accommodations facility terminal 300. The revenue management system 100 identifies the accommodation plans which match an attribute indicated by the information received here, namely, the above-mentioned two accommodation plans of "Relaxing Girls' Party Plan with Late Checkout and Massage" and "Girls' Party Plan with Early Check-in and Welcome Drink", in which the keyword "Girls' Party Plan" is included and whose main sales target is "women in their twenties". The revenue management system 100 identifies a sales probability of each of these accommodation plans to women in their twenties is respectively "77%" and "62%", an accommodation plan with more than or equal to a predetermined standard "70%" is "Relaxing Girls' Party Plan with Late Checkout and Massage", and that its sale price is "19,800 yen", thus identifying "Girls' Party Plan" and its contents as a strong-selling accommodation plan to women in their twenties.

Subsequently, for a given location of the accommodations facility of a seller of the identified "Relaxing Girls' Party Plan with Late Checkout and Massage" as mentioned above and a location of the accommodations facility designated by the accommodations facility terminal 400 (example: another accommodations facility which an accommodations provider that operates the accommodations facility operates, which has similar functions and customer ratings to the above-mentioned accommodations facility of the seller), based on the price advantage table 128, the revenue management system 100 identifies the extent of separation and the separation direction of a price advantage between the accommodations facility of seller and the above-mentioned designated accommodations facility (S403).

For example, for a given location "Hakone" of the accommodations facility of sale source of "Relaxing Girls' Party Plan with Late Checkout and Massage" and a location "Sotobou" of the accommodations facility designated by the accommodations facility terminal 400, based on the price advantage table 128, the revenue management system 100 identifies the extent of separation of the price advantage between the accommodations facility of seller and the designated accommodations facility as "+10%-1%=9%" and identifies the separation direction as negative, etc.

Subsequently, the revenue management system 100 calculates a price obtained by increasing/reducing, at a predetermined rate, a sale price of the accommodation plan, according to the extent of separation and the separation direction identified in the above-mentioned step S403, as an offered price of the accommodation plan in the above-mentioned designated accommodations facility (S404).

For example, the revenue management system 100 calculates a price "18,018 yen" obtained by reducing, at a predetermined rate of "9%", the sales price of the accommodation plan of "19,800 yen", according to the extent of separation "9%" and the separation direction "negative" identified in the above-mentioned step S403, as an offered price of the accommodation plan in the above-mentioned designated accommodations facility. As another example, the revenue management system 100 calculates a price of "20,790 yen" obtained by increasing, at a predetermined rate of "5%", the sales price of the accommodation plan of "19,800 yen", according to the extent of separation "5%" and the separation direction "positive" identified in the above-mentioned step S403, as an offered price of the accommodation plan in the above-mentioned designated accommodations facility.

Subsequently, the revenue management system 100 notifies the accommodations facility terminal 400 of the above-mentioned accommodations provider which operates the above-mentioned designated accommodations facility of the offered price of the accommodation plan calculated in the step S404 (S405) and finishes the processing. Alternatively, in step S405, the revenue management system 100 may be configured to instruct a predetermined server of the net agent 200 or a server of the official web site of the designated accommodations facility to set the above-mentioned offered price as the sales price of the accommodation plan on the web site.

### ---Processing Procedure Example 5---

Subsequently, a process of calculating an offered price according to a proportion of the accommodations facility whose rooms are not sold out by the net agent 200 and remaining days until the date of stay is explained.

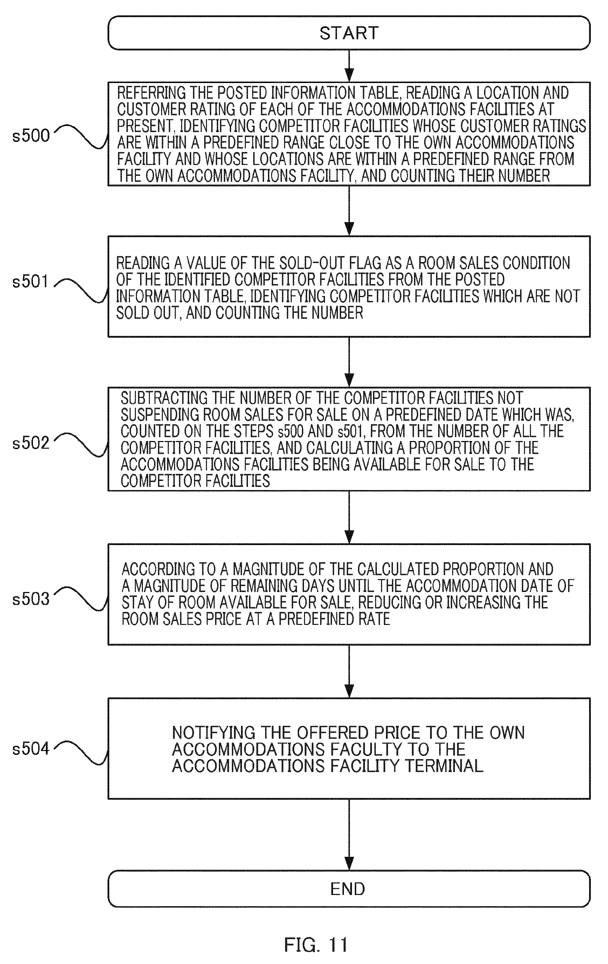

Figure 11 is a flowchart showing a process example 5 of the revenue management method of the present embodiment.

In this case, the revenue management system 100 references the above-mentioned posted information table 125, retrieves the locations of accommodation facilities and customer ratings at present, identifies competitor facilities whose customer ratings are within a predetermined range close to that of the above-mentioned own accommodations facility and located within a predetermined distance from the accommodations facility, and counts their number (S500). Further, the revenue management system 100 retrieves values of the sold-out flags as sales of the rooms of the identified competitor facilities from the posted information table 125, identifies competitor facilities whose values of the sold-out flags are "0", namely the competitor facilities which are not sold out, and counts their number (S501). The revenue management system 100, for example, counts the number of competitor facilities as "30", etc. which are located in the same town of "B Town, A Ward" as the accommodations facility and whose differences in the customer rating are, for example, within 0.2, etc., and in the "30" competitor facilities the revenue management system 100 counts the number of competitor facilities as "20", etc. whose values of the sold-out flags are "0" on "May 31", namely whose room sales are ongoing.

Subsequently the revenue management system 100 subtracts the number of competitor facilities not suspending room sales for a predetermined date from the number of all competitor facilities, and calculates a proportion of the accommodation facilities which are available for sale, namely are not suspended, to the competitor facilities (S502). In the above-mentioned example, the revenue management system 100 subtracts the number of competitor facilities "20" not suspending rooms sales for a predetermined date from the number of all competitor facilities "30", and calculates the proportion of the accommodation facilities which are available for sale, namely are not sold out to the competitor facilities, as "66%", etc.

Subsequently the revenue management system 100, according to a magnitude of the proportion calculated in the step S502 and the number of remaining days until the date of stay of rooms available for sale in the accommodations facility on the web site of a predetermined net agent, reduces the room sales price for the accommodations facility or competitor facilities on the web site of the net agent or the official web site at a predetermined rate that decreases as the above-mentioned proportion and the number of remaining days decrease compared with a predetermined value. On the other hand, the revenue management system 100 increases a room sales price for the accommodations facility or competitor facilities on the web site of the net agent or the official web site, at a predetermined rate that increases as the above-mentioned proportion and the above-mentioned number of remaining days increases compared with a predetermined value (S503). Then the revenue management system 100 notifies the accommodations facility terminal 400 of the price as an offered price to the accommodations facility (S504). Alternatively, the revenue management system 100 may be configured to instruct the net agent or a predetermined server on the web site of the accommodations facility that this offered price be set as the room sales price on the web site.

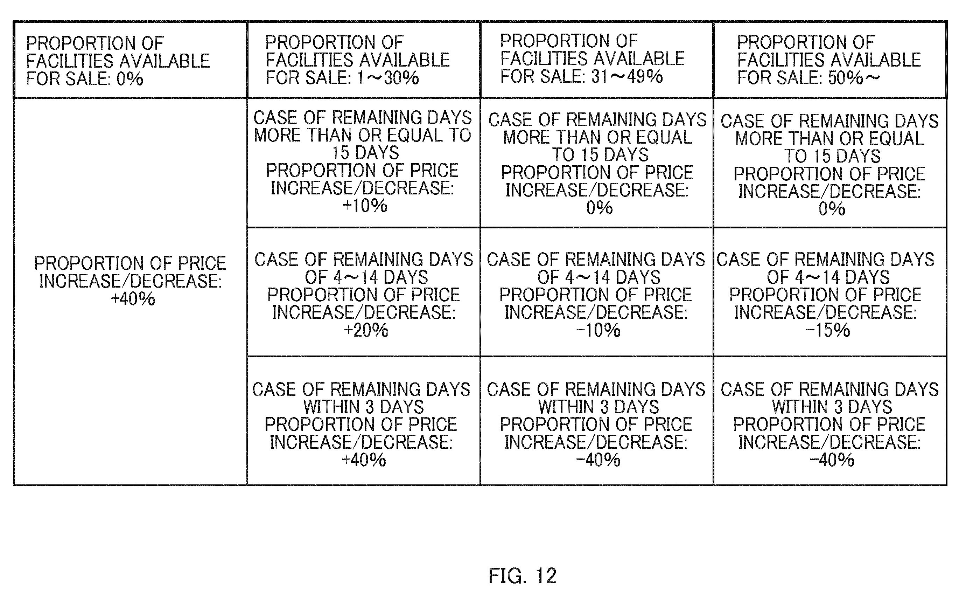

It is to be noted that, for the processing in step S503, the revenue management system 100 preliminarily retains a rule defining a reducing proportion and an increasing proportion of the room sales price in response to the magnitude of the above-mentioned degree of proportion and the above-mentioned number of remaining days. An example of the rule is shown in figure 12. As exemplified in this figure 12, in a case in which competitor facilities except the accommodations facility, namely all competitor facilities suspend sales, the revenue management system 100 adopts a predetermined maximum increasing proportion (example: 40%) to the existing room sales price and thereby increases the price to be the offered price. Further, in a case in which the above-mentioned proportion of competitor facilities whose rooms are available for sale is more than or equal to 50% and the remaining days are more than or equal to 15 days, the revenue management system 100 does not modify the existing room sales price, and sets this directly to be the offered price. Further, in the cases where a proportion of competitor facilities whose rooms are available for sale is more than or equal to 50% similarly as mentioned above and the remaining days are 4-14 days, the revenue managing system 100 adopts a predetermined reducing proportion (example: -15%) to the existing room sales price and reduces the price to be the offered price.

On the other hand, in cases in which a proportion of competitor facilities whose rooms are available for sale is less than or equal to 30% and the remaining days are more than or equal to 15 days, the revenue management system 100 adopts a predetermined increasing proportion (example: +10%) to the existing room sales price and reduces the price to be the offered price. Similarly, where a proportion of competitor facilities whose rooms are available for sale is less than or equal to 30% and the remaining days are 4-14 days, the revenue management system 100 adopts a predetermined increasing proportion (example: +20%) to the existing room sales price and reduces the price to be the offered price. Further, where a proportion of competitor facilities whose rooms are available for sale is less than or equal to 30% and the remaining days are within 3 days, the revenue management system 100 adopts a predetermined increasing proportion (example: +40%) to the existing room sales price and reduces the price to be the offered price.

As explained above, according to the present embodiments, a configuration of competitive and appropriate prices for guest accommodations in multiple channels is efficiently enabled.

Additional modifications and variations of the present invention are possible in light of the above teachings. It is therefore to be understood that, within the scope of the appended claims, the invention may be practiced other than as specifically described herein.

## Claims

1. A revenue management system comprising:
a communication device communicating with other devices through a network; and
an arithmetic device, configured to execute:
a process of retrieving a predetermined information including at least a room sales price and a customer rating, for a predetermined accommodations facility and another accommodations facility other than the predetermined accommodations facility, at predetermined time intervals, from at least any one of a web site of each of multiple net agents, a site controller having a contract with the predetermined accommodations facility, and an official web site which each accommodations facility itself operates;
a process of identifying, by each of web sites of net agents or each of the official web sites, another accommodations facility being a competitive facility whose customer rating is within a predetermined range close to that of the predetermined accommodations facility, or another accommodations facility being a competitive facility in the vicinity of the predetermined accommodations facility and being designated by a predetermined terminal, and a room sales price thereof, and calculating, according to a extent of separation and a separation direction between the identified customer rating of the competitive facility and the customer rating of the predetermined accommodations facility, a price obtained by increasing or decreasing, at a predetermined rate, a room sales price of the predetermined accommodations facility or the competitive accommodations facility on the web site of the net agent or the official web site, as an offered price to the predetermined accommodations facility; and
a process of executing at least any one of a notification of the offered price to a terminal of the predetermined accommodations facility and a setting instruction to the net agent or a predetermined server of an official web site of the predetermined accommodations facility to set the offered price to be a room sales price on the web site.

2. The revenue management system according to claim 1, wherein the arithmetic device is configured to:
on retrieving the information, retrieve information including an guest accommodations price, a customer rating, and a recommendation ranking regarding the predetermined accommodations facility and another accommodations facility, at predetermined time intervals, from at least any one of a web site of each of multiple net agents, a site controller having a contract with the predetermined accommodations facility, and an official web site which each accommodations facility itself operates; and
in calculating the offered price, based on the retrieved information, identify, by each of web sites of net agents or each of the official web sites, another accommodations facility being a competitive facility whose customer rating or a recommendation ranking is within a predetermined range close to that of the predetermined accommodations facility, or another accommodations facility being a competitive facility in the vicinity of the predetermined accommodations facility and being designated by a predetermined terminal, and a room sales price thereof, and calculate an offered price by increasing or decreasing, at a predetermined rate, a room sales price of the predetermined accommodations facility or the competitive accommodations facility on the web site of the net agent or the official web site according to each extent of separation and each separation direction between the identified customer rating and the recommendation ranking of the competitive facility and the customer rating and the recommendation ranking of the predetermined accommodations facility.

3. The revenue management system according to claim 1 or 2, wherein the arithmetic device is further configured to:
execute a process of, based on the information retrieved after the notification of offered price or the setting instruction, checking the room sales price of the predetermined accommodations facility against the offered price, and when detecting that the room sales price has been set to the offered price, retrieving room sales figures of the predetermined accommodations facility for a predetermined period from at least any one of the net agent, the site controller, and the official web site of the predetermined accommodations facility, and calculating a probability that rooms of the predetermined accommodations facility could be sold at the offered price based on the retrieved room sales figures; and
in calculating the offered price, according to a magnitude of the extent of separation between the calculated probability and a predetermined standard, increase the predetermined rate for reducing the room sales price of the predetermined accommodations facility or the competitive facility on the web site of the net agent or the official web site, and calculate a price obtained by increasing, at the increased predetermined rate, the room sales price of the predetermined accommodations facility or the competitive facility, as the offered price to the predetermined accommodations facility.

4. The revenue management system according to any one of claims 1-3, wherein the arithmetic device is further configured to:
execute a process of retrieving an instruction of a lower limit value of the room sales price from the terminal of the predetermined accommodations facility; and
in calculating the offered price, calculate a price obtained by reducing the room sales price of the predetermined accommodations facility or the competitive facility on the web site of the net agent or the official web site at a predetermined rate within a range of not falling below the lower limit value as the offered price to the predetermined accommodations facility.

5. The revenue management system according to any one of claims 1-4, wherein the arithmetic device is configured to:
in calculating the offered price, based on the retrieved information and information of room sales included in the retrieved information, identify a date of suspended room sales in the most competitive facility whose customer rating is closest to that of the predetermined accommodations facility or in the most competitive facility being in the vicinity of the predetermined accommodations facility and being designated from the terminal, identify a semi-competitive facility whose rooms are available for sale on the identified date and whose customer rating is lower than that of the most competitive facility and the room sales price thereof by each of web sites of net agents or each of the official web sites, and, according to the extent of separation between the customer rating of the identified semi-competitive facility and the customer rating of the predetermined accommodations facility, calculate a price obtained by increasing, at a predetermined rate, the room sales price of the predetermined accommodations facility or the semi-competitive facility on the web site of the net agent or the official web site as the offered price to the predetermined accommodations facility.

6. The revenue management system according to any one of claims 1-5, wherein the arithmetic device is configured to:
in calculating the offered price, based on the retrieved information, when detecting that the remaining number of rooms of the predetermined accommodations facility becomes lower than or equal to a predetermined number, according to the extent of separation between the customer rating of the competitive facility whose customer rating is lower than that of the predetermined accommodations facility among the competitor facilities at the time of detection and the customer rating of the predetermined accommodations facility, calculate a price obtained by increasing, at a predetermined rate, the room sales price of the predetermined accommodations facility or the competitive facility on the web site of the net agent or the official web site as the offered price to the predetermined accommodations facility.

7. The revenue management system according to claim 1, wherein the arithmetic device is configured to execute:
a process of retrieving, as room sales figures for a predetermined time period in the predetermined accommodations facility, sales figures of an accommodation plan including a predetermined service from at least any one of the net agent, the site controller, and the official web site of the predetermined accommodations facility, and based on the retrieved sales figures, calculating a probability that an accommodation plan including a predetermined service could be sold for a predetermined time period at a predetermined price to customers with predetermined attributes;
a process of receiving information on each of an accommodation plan scheduled to be available for sale and a target customer from the terminal, and based on the calculated probability regarding the accommodation plan which matches to an attribute indicated by each piece of information, identifying an accommodation plan having the probability greater than or equal to a predetermined standard and the sales price thereof;
a process of calculating, for a given location of the sales source accommodations facility in the identified accommodation plan which the retrieved sales figures indicate and a location of a designated accommodations facility designated from a predetermined terminal, based on information of location-by-location price advantage preliminarily stored in a storage device, according to the extent of separation and the separation direction of the price advantage between the sales source accommodations facility and the designated accommodations facility, a price obtained by increasing or reducing, at a predetermined rate, the sales price of the accommodation plan as the offered price of the accommodation plan in the designated accommodations facility; and
a process of executing at least any one of a notification of the offered price to the terminal of the designated accommodations facility and a setting instruction of setting the offered price to be a sales price of the accommodation plan on the web site to the net agent or a predetermined server of the official web site of the designated accommodations facility.

8. The revenue management system according to claim 5, wherein the arithmetic device is configured to execute:
a process of, in calculating the offered price, based on the retrieved information and information on each of room sales included in the retrieved information and facility locations, calculating a proportion of the competitive facility whose rooms are not suspended to sell among the competitor facilities whose customer ratings are within a predetermined range close to that of a predetermined accommodations facility and which are located within a predetermined range from the predetermined accommodations facility or among the competitor facilities being designated from the terminal to the all of the competitor facilities;
a process of calculating, according to a magnitude of the calculated proportion and a magnitude of remaining days until an date of stay of room available for sale in the predetermined accommodations facility on the web site of a predetermined net agent, a price obtained by more reducing, at a predetermined rate, the room sales price in the predetermined accommodations facility or the competitive facility on the web site of the net agent or the official web site, larger the proportion compared with a predetermined value and smaller the remaining days compared with a predetermined value, as the offered price to the predetermined accommodations facility; and
a process of calculating, according to a magnitude of the calculated proportion and a magnitude of remaining days until an date of stay of room available for sale in the predetermined accommodations facility on the web site of a predetermined net agent, a price obtained by more increasing, at a predetermined rate, the room sales price in the predetermined accommodations facility or the competitive facility on the web site of the net agent or the official web site, smaller the proportion compared with a predetermined value and larger the remaining days compared with a predetermined value, as the offered price to the predetermined accommodations facility.

9. A revenue management method implemented by an information processing device comprising a communication device communicating with other devices through a network, the revenue management method comprising:
retrieving a predetermined information including at least a room sales price and a customer rating, regarding a predetermined accommodations facility and another accommodations facility except the predetermined accommodations facility, at predetermined time intervals, from at least any one of a web site of each of multiple net agents, a site controller having a contract with the predetermined accommodations facility, and an official web site which each accommodations facility itself operates;
identifying, by each of web sites of net agents or each of the official web sites, another accommodations facility being a competitive facility whose customer rating is within a predetermined range close to that of the predetermined accommodations facility, or another accommodations facility being a competitive facility in the vicinity of the predetermined accommodations facility and being designated by a predetermined terminal, and a room sales price thereof, and calculating, according to a extent of separation and a separation direction between the identified customer rating of the competitive facility and the customer rating of the predetermined accommodations facility, a price obtained by increasing or decreasing, at a predetermined rate, a room sales price of the predetermined accommodations facility or the competitive accommodations facility on the web site of the net agent or the official web site, as an offered price to the predetermined accommodations facility; and
executing at least any one of a notification of the offered price to a terminal of the predetermined accommodations facility and a setting instruction to the net agent or a predetermined server of an official web site of the predetermined accommodations facility to set the offered price to be a room sales price on the web site.

10. The revenue management method according to claim 9, further comprising:
with the information processing device, on retrieving the information, retrieves information including an guest accommodations price, a customer rating, and a recommendation ranking regarding the predetermined accommodations facility and another accommodations facility, at predetermined time intervals, from at least any one of a web site of each of multiple net agents, a site controller having a contract with the predetermined accommodations facility, and an official web site which each accommodations facility itself operates; and
with the information processing device, in calculating the offered price, based on the retrieved information, identifies, by each of web sites of net agents or each of the official web sites, another accommodations facility being a competitive facility whose customer rating or a recommendation ranking is within a predetermined range close to that of the predetermined accommodations facility, or another accommodations facility being a competitive facility in the vicinity of the predetermined accommodations facility and being designated by a predetermined terminal, and a room sales price thereof, and calculates an offered price by increasing or decreasing, at a predetermined rate, a room sales price of the predetermined accommodations facility or the competitive accommodations facility on the web site of the net agent or the official web site according to each extent of separation and each separation direction between the identified customer rating and the recommendation ranking of the competitive facility and the customer rating and the recommendation ranking of the predetermined accommodations facility.

11. The revenue management method according to claim 9 or 10, further comprising:
with the information processing device, based on the information retrieved after the notification of offered price or the setting instruction, checking the room sales price of the predetermined accommodations facility against the offered price, and when detecting that the room sales price has been set to the offered price, retrieving room sales figures of the predetermined accommodations facility for a predetermined period from at least any one of the net agent, the site controller, and the official web site of the predetermined accommodations facility, and calculating a probability that rooms of the predetermined accommodations facility could be sold at the offered price based on the retrieved room sales figures; and,
with the information processing device, in calculating the offered price, according to a magnitude of the extent of separation between the calculated probability and a predetermined standard, increasing the predetermined rate for reducing the room sales price of the predetermined accommodations facility or the competitive facility on the web site of the net agent or the official web site, and calculating a price obtained by increasing, at the increased predetermined rate, the room sales price of the predetermined accommodations facility or the competitive facility, as the offered price to the predetermined accommodations facility.

12. The revenue management method according to any one of claims 9-11, further comprising:
with the information processing device, retrieving an instruction of a lower limit value of the room sales price from the terminal of the predetermined accommodations facility; and,
with the information processing device, in calculating the offered price, calculating a price obtained by reducing the room sales price of the predetermined accommodations facility or the competitive facility on the web site of the net agent or the official web site at a predetermined rate within a range of not falling below the lower limit value as the offered price to the predetermined accommodations facility.

13. The revenue management method according to any one of claims 9-12, comprising:
with the information processing device, in calculating the offered price, based on the retrieved information and information of room sales included in the retrieved information, identifying a date of suspended room sales in the most competitive facility whose customer rating is closest to that of the predetermined accommodations facility or in the most competitive facility being in the vicinity of the predetermined accommodations facility and being designated from the terminal, identifying a semi-competitive facility whose rooms are available for sale on the identified date and whose customer rating is lower than that of the most competitive facility and the room sales price thereof by each of web sites of net agents or each of the official web sites, and, according to the extent of separation between the customer rating of the identified semi-competitive facility and the customer rating of the predetermined accommodations facility, calculating a price obtained by increasing, at a predetermined rate, the room sales price of the predetermined accommodations facility or the semi-competitive facility on the web site of the net agent or the official web site as the offered price to the predetermined accommodations facility.

14. The revenue management method according to any one of claims 9-13, comprising:
with the information processing device, in calculating the offered price, based on the retrieved information, when detecting that the remaining number of rooms of the predetermined accommodations facility becomes lower than or equal to a predetermined number, according to the extent of separation between the customer rating of the competitive facility whose customer rating is lower than that of the predetermined accommodations facility among the competitor facilities at the time of detection and the customer rating of the predetermined accommodations facility, calculating a price obtained by increasing, at a predetermined rate, the room sales price of the predetermined accommodations facility or the competitive facility on the web site of the net agent or the official web site as the offered price to the predetermined accommodations facility.

15. The revenue management method according to claim 9, comprising:
with the information processing device, retrieving, as room sales figures for a predetermined time period in the predetermined accommodations facility, sales figures of an accommodation plan including a predetermined service from at least any one of the net agent, the site controller, and the official web site of the predetermined accommodations facility, and based on the retrieved sales figures, calculating a probability that an accommodation plan including a predetermined service could be sold for a predetermined time period at a predetermined price to customers with predetermined attributes;
with the information processing device, receiving information on each of an accommodation plan scheduled to be available for sale and a target customer from the terminal, and based on the calculated probability regarding the accommodation plan which matches to an attribute indicated by each piece of information, identifying an accommodation plan having the probability greater than or equal to a predetermined standard and the sales price thereof;
with the information processing device, calculating, for a given location of the sales source accommodations facility in the identified accommodation plan which the retrieved sales figures indicate and a location of a designated accommodations facility designated from a predetermined terminal, based on information of location-by-location price advantage preliminarily stored in a storage device, according to the extent of separation and the separation direction of the price advantage between the sales source accommodations facility and the designated accommodations facility, a price obtained by increasing or reducing, at a predetermined rate, the sales price of the accommodation plan as the offered price of the accommodation plan in the designated accommodations facility; and
with the information processing device, executing at least any one of a notification of the offered price to the terminal of the designated accommodations facility and a setting instruction of setting the offered price to be a sales price of the accommodation plan on the web site to the net agent or a predetermined server of the official web site of the designated accommodations facility.

16. The revenue management method according to claim 9, comprising:
with the information processing device, in calculating the offered price, based on the retrieved information and information on each of room sales included in the retrieved information and facility locations, calculating a proportion of the competitive facility whose rooms are not suspended to sell among the competitor facilities whose customer ratings are within a predetermined range close to that of a predetermined accommodations facility and which are located within a predetermined range from the predetermined accommodations facility or among the competitor facilities being designated from the terminal to the all of the competitor facilities;
with the information processing device, calculating, according to a magnitude of the calculated proportion and a magnitude of remaining days until an date of stay of room available for sale in the predetermined accommodations facility on the web site of a predetermined net agent, a price obtained by more reducing, at a predetermined rate, the room sales price in the predetermined accommodations facility or the competitive facility on the web site of the net agent or the official web site, larger the proportion compared with a predetermined value and smaller the remaining days compared with a predetermined value, as the offered price to the predetermined accommodations facility; and
with the information processing device, calculating, according to a magnitude of the calculated proportion and a magnitude of remaining days until an date of stay of room available for sale in the predetermined accommodations facility on the web site of a predetermined net agent, a price obtained by more increasing, at a predetermined rate, the room sales price in the predetermined accommodations facility or the competitive facility on the web site of the net agent or the official web site, smaller the proportion compared with a predetermined value and larger the remaining days compared with a predetermined value, as the offered price to the predetermined accommodations facility.
